# EUROPEAN PATENT APPLICATION

(11) **EP 3 179 208 A1**
(43) Date of publication of application: **14.06.2017**
(21) Application number: 16200573.0
(22) Date of filing: 24.11.2016
(51) Int. Cl.: G01B 21/32, G01B 11/16, F01D 5/28, C23C 24/00

(54) **COMPONENTS WITH PROTECTED STRAIN SENSORS AND METHODS FOR MANUFACTURING THE SAME**

(30) Priority: 10.12.2015 US 201514964839
(71) Applicant: General Electric Company, Schenectady, NY 12345 (US)
(72) Inventor: HOVIS, Gregory Lee, Greenville, SC South Carolina 29615 (US); WARD, John David, Greenville, SC South Carolina 29615 (US); GERMANN, Bryan Joseph, Greenville, SC South Carolina 29615 (US); BURNSIDE, Jason Lee, Greenville, SC South Carolina 29615 (US)
(74) Representative: Pöpper, Evamaria

(57) **Abstract**

Components (10) can comprise a substrate (11), a protected strain sensor (40) comprising at least two reference points (41, 42) disposed on the substrate (11), and a peripheral coating (50) disposed on the substrate (11) adjacent the protected strain sensor (40), wherein the peripheral coating (50) covers at least a portion of an exterior edge (49) of the protected strain sensor (40).

## Description

The subject matter disclosed herein relates to strain sensors and, more specifically, to components with protected strain sensors and methods for monitoring the same.

Some components may need to operate in environments comprising elevated temperatures and/or corrosive conditions. For example, turbomachines are widely utilized in fields such as power generation and aircraft engines. Such gas turbine systems include a compressor section, a combustor section, and at least one turbine section. The compressor section is configured to compress air as the air flows through the compressor section. The air is then flowed from the compressor section to the combustor section, where it is mixed with fuel and combusted, generating a hot gas flow. The hot gas flow is provided to the turbine section, which utilizes the hot gas flow by extracting energy from it to power the compressor, an electrical generator, and other various loads.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures may depend in part one or more protective coatings and/or on supplying a cooling air to the outer surfaces of the metal parts through various methods. The metal parts of these engines that are particularly subject to high temperatures, and thus require particular attention with respect to cooling, are the metal parts forming combustors and parts located aft of the combustor.

Moreover, these and other components may experience stress and/or strain from various forces over its operational lifecycle. While various tools may be utilized to measure imparted stress and strain in relatively standard environments, turbine and other components in may experience hotter and/or more corrosive working conditions that may be unsuitable for such measurement tools.

Accordingly, alternative components with protected strain sensors and methods for manufacturing the same would be welcome in the art.

In one embodiment, component comprising is disclosed. The component can comprise a substrate, a protected strain sensor comprising at least two reference points disposed on the substrate, and a peripheral coating disposed on the substrate adjacent the protected strain sensor, wherein the peripheral coating covers at least a portion of an exterior edge of the protected strain sensor.

In another embodiment, another component is disclosed. The component can comprise a substrate, an intermediate coating disposed on the substrate, a protected strain sensor comprising at least two reference points disposed on the intermediate coating, and a peripheral coating disposed on the intermediate coating adjacent the protected strain sensor, wherein the peripheral coating covers at least a portion of an exterior edge of the protected strain sensor.

In yet another embodiment, a method for manufacturing a protected strain sensor on a component is disclosed. The method can comprise depositing the protected strain sensor comprising at least two reference points on a substrate of the component, and depositing a peripheral coating on the substrate, wherein the peripheral coating covers at least a portion of an exterior edge of the protected strain sensor.

These and additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary component comprising a protected strain sensor according to one or more embodiments shown or described herein;
FIG. 2 is an exemplary protected strain sensor according to one or more embodiments shown or described herein;
FIG. 3 is cross section of an exemplary component with a protected strain sensor according to one or more embodiments shown or described herein;
FIG. 4 is a cross section of another exemplary component with a protected strain sensor according to one or more embodiments shown or described herein;
FIG. 5 is a cross section of yet another exemplary component with a protected strain sensor according to one or more embodiments shown or described herein; and,
FIG. 6 is an exemplary method for manufacturing a protected strain sensor on a component according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

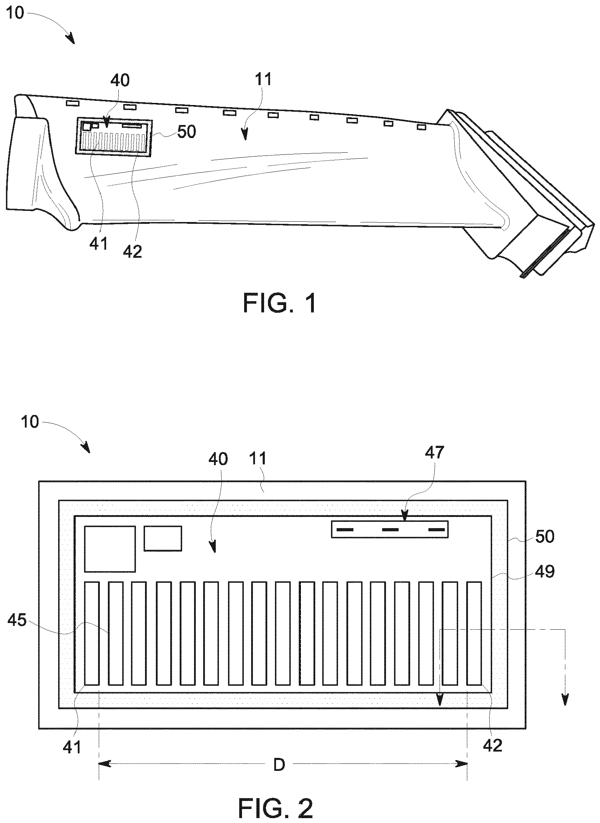

Referring now to FIGS. 1 and 2, a component 10 generally comprises a substrate 11, a protected strain sensor 40 comprising at least two reference points 41 and 42 disposed on the substrate 11, and a peripheral coating 50 disposed on the substrate adjacent the protected strain sensor 40, wherein the peripheral coating 50 can cover at least a portion of an exterior edge 49 of the protected strain sensor. The peripheral coating 50 may thereby limit or avoid degradation of one or more portions of the protected strain sensor 40 (e.g., its exterior edge 49) to help maintain its integrity throughout its life.

The component 10 (and more specifically the substrate 11 of the overall component 10) can comprise a variety of types of components used in a variety of different applications, such as, for example, components utilized in high temperature applications (e.g., components comprising nickel or cobalt based superalloys). In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

Referring now to FIGS. 1-5, the protected strain sensor 40 is deposited on a portion of the exterior surface 11 of the component 10. The protected strain sensor 40 generally comprises at least two reference points 41 and 42 that can be used to measure the distance D between said at least two reference points 41 and 42 at a plurality of time intervals. As should be appreciated to those skilled in the art, these measurements can help determine the amount of strain, strain rate, creep, fatigue, stress, etc. at that region of the component 10. The at least two reference points 41 and 42 can be disposed at a variety of distances and in a variety of locations depending on the specific component 10 so long as the distance D there between can be measured. The at least two reference points 41 and 42 may comprise dots, lines, circles, boxes or any other geometrical or non-geometrical shape so long as they are consistently identifiable and may be used to measure the distance D there between. Moreover, the protected strain sensor 40 may comprise an exterior edge 49 and, depending on the configuration of the protected strain sensor, potentially one or more interior edges 48.

As best illustrated in FIGS. 1-5, the protected strain sensor 40 may comprise a variety of different configurations and cross-sections such as by incorporating a variety of differently shaped, sized, and positioned reference points 41 and 42. For example, as illustrated in FIG. 2, the protected strain sensor 40 may comprise a variety of different reference points comprising various shapes and sizes. Such embodiments may provide for a greater variety of distance measurements D such as between the outer most reference points (as illustrated), between two internal reference points, or any combination there between. The greater variety may further provide a more robust strain analysis on a particular portion of the component 10 by providing strain measurements across a greater variety of locations.

Furthermore, the dimensions of the protected strain sensor 40 may depend on, for example, the component 10, the location of the protected strain sensor 40, the targeted precision of the measurement, deposition technique, and optical measurement technique. For example, in some embodiments, the protected strain sensor 40 may comprise a length and width ranging from less than 1 millimeter to greater than 300 millimeters. Moreover, the protected strain sensor 40 may comprise any thickness that is suitable for deposition and subsequent optical identification without significantly impacting the performance of the underlying component 10. For example, in some embodiments, the protected strain sensor 40 may comprise a thickness of less than from about .1 millimeters to greater than 1 millimeter. In some embodiments, the protected strain sensor 40 may have a substantially uniform thickness. Such embodiments may help facilitate more accurate measurements for subsequent strain calculations between the first and second reference points 41 and 42.

In some embodiments, the protected strain sensor 40 may comprise a positively deposited square or rectangle wherein the first and second reference points 41 and 42 comprise two opposing sides of said square or rectangle. In other embodiments, the protected strain sensor 40 may comprise at least two deposited reference points 41 and 42 separated by negative space 45 as illustrated in FIG. 2 (i.e., an area in which strain sensor material is not deposited). The negative space 45 may comprise, for example, an exposed portion 12 of the exterior surface 11 of the component 10. Alternatively or additionally, the negative space 45 may comprise a peripheral coating 50 that helps protect at least a portion of the interior edge(s) 48 of the protected strain sensor 40 and its reference points 41 and 42.

As illustrated in FIG. 2, in even some embodiments, the protected strain sensor 40 may be deposited to form a unique identifier 47 (hereinafter "UID"). The UID 47 may comprise any type of barcode, label, tag, serial number, pattern or other identifying system that facilitates the identification of that particular protected strain sensor 40. In some embodiments, the UID 47 may additionally or alternatively comprise information about the component 10 (e.g., turbine component) or the system or machine that the component 10 is incorporated into (e.g., gas or steam turbine). The UID 47 may thereby assist in the identification and tracking of particular protected strain sensors 40, components 10 or even overall systems or machines to help correlate measurements for past, present and future operational tracking.

The component 10 further comprises a peripheral coating 50 disposed on the substrate 11 adjacent the protected strain sensor 40, wherein the peripheral coating 50 covers at least a portion of the exterior edge 49 of the protected strain sensor 40. In some embodiments, where the protected strain sensor 40 comprises one or more interior edges 48 (such as when the protected strain sensor 40 comprises negative space 45 between the first and second reference points 41 and 42), the peripheral coating 50 may cover at least a portion of the one or more interior edges 48. The peripheral coating 50 can thereby help protect the protected strain sensor 40 and potentially the substrate 11 from the operating environment of the component 10 (e.g., elevated temperatures in an industrial gas turbine). For example, the protected strain sensor 40 may be subject to edge degradation along the exterior edge 49 and/or interior edge 48 due to corrosion and/or erosion but for the protection of the peripheral coating 50.

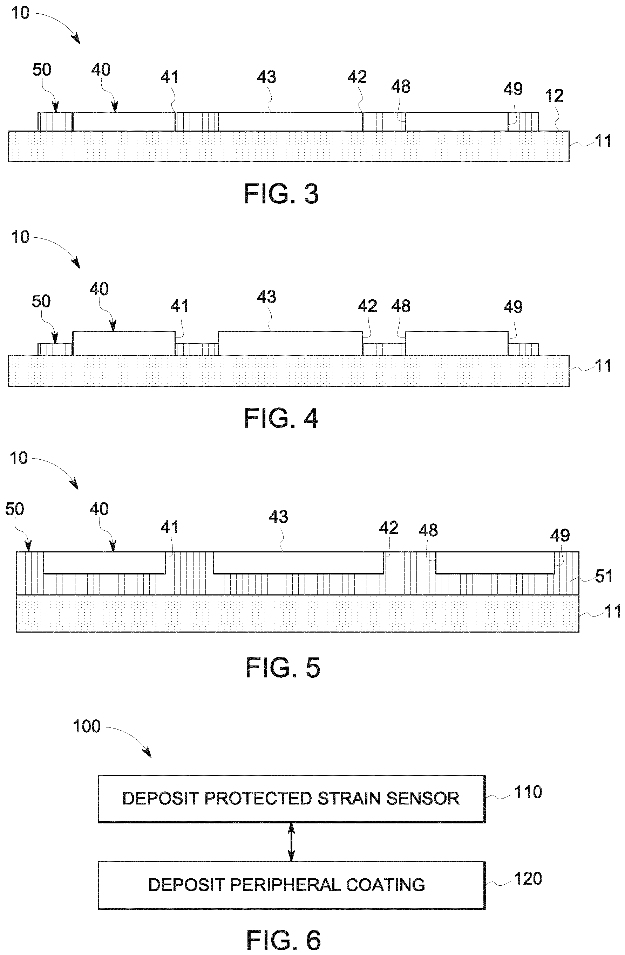

Referring now to FIGS. 3-5, the peripheral coating 50 may be disposed in a variety of configurations with respect to the protected strain sensor 40 and the substrate 11. For example, the peripheral coating 50 may cover all or only a portion of the exterior edges of the protected strain sensor 40. In some embodiments, such as that illustrated in FIG. 3, the protected strain sensor 40 and the peripheral coating 50 may comprise a substantially similar height from the substrate 11. In some embodiments, such as that illustrated in FIG. 4, the protected strain sensor 40 may comprise a greater height from the substrate 11 than the peripheral coating 50. In even some embodiments, such as that illustrated in FIG. 5, the protected strain sensor 40 may comprise a lower height from the substrate 11 that the peripheral coating 50.

As discussed above, in some embodiments, the protected strain sensor 40 may comprise one or more interior edges 48. In some of these embodiments, the peripheral coating 50 may cover at least a portion of the one or more interior edges 48. The peripheral coating 50 covering at least a portion of the one or more interior edges 48 may comprise the same material, a similar material, or a different material than the peripheral coating 50 covering at least a portion of the exterior edges 49.

Still referring to FIGS. 3-5, in some embodiments, the top surface 43 of the protected strain sensor 40 may remain exposed to help facilitate visual or other readings. For example, the peripheral coating 50 may not cover the top surface 43 of the protected strain sensor 40 as illustrated in FIGS. 3-5. Such embodiments may be facilitated through a variety of manufacturing methods such as using additive manufacturing, or removing a top layer of material after deposition. In other embodiments, the peripheral coating 50 may cover a portion of the top surface 43, such as portions that may not be utilized for strain sensor readings.

As illustrated in FIGS. 3-5, the protected strain sensor 40 and/or peripheral coating 50 may be disposed directly on the substrate 10. However, in some embodiments, one or more intermediate coatings may be applied between the substrate 11 and the protected strain sensor 40 and/or the peripheral coating 50. In some of these embodiments, the intermediate coating may comprise the same material as the peripheral coating 50 such as, for example, when they comprise one continuous layer of material. Moreover, in some embodiments, the peripheral coating may cover all of the substrate 10. However, in some embodiments, the peripheral coating 50 may cover only a portion of the substrate 10 such that the substrate 10 comprises an exposed surface adjacent the peripheral coating 50. The exposed surface may comprise the substrate 10 itself, or may comprise one or more intermediate coatings.

The peripheral coating 50 can comprise a variety of materials based in part, for example, on the environment of the component 10. In some embodiments, the peripheral coating 50 can comprise a ceramic material that may provide increased temperature survivability. For example, in some embodiments, the ceramic material may comprise a thermal barrier coating such as yttria-stabilized zirconia (also referred to as YSZ). In such embodiments, the YSZ may comprise, for example, YSZ-D111. In even some embodiments, the peripheral coating 50 may comprise a metallic bond coat and/or thermally grown oxide to assist in the deposition of the ceramic top coat (e.g., YSZ). In some embodiments, the peripheral coating 50 may comprise a gel coating such as gel aluminide.

The protected strain sensor 40 may be deposited in one or more of a variety of locations on the substrate 11. For example, if the substrate comprises a turbine component, the protected strain sensor 40 may be deposited on a turbine blade, compressor blade, vane, nozzle, shroud, rotor, transition piece or casing. In such embodiments, the protected strain sensor 40 may be deposited in one or more locations known to experience various forces during unit operation such as on or proximate airfoils, platforms, tips or any other suitable location. Moreover, since the protected strain sensor 40 is at least partially protected by the peripheral coating 50, the protected strain sensor 40 may be deposited in one or more locations known to experience elevated temperatures (wherein strain sensors comprising other materials may corrode and/or erode). For example the protected strain sensor 40 may be deposited on a hot gas path or combustion turbine component.

In even some embodiments, multiple protected strain sensors 40 may be deposited on a single turbine component or on multiple turbine components. For example, a plurality of protected strain sensors 40 may be deposited on a single turbine component (e.g., a turbine blade) at various locations such that the strain may be determined at a greater number of locations about the individual turbine component. Alternatively or additionally, a plurality of like turbine components (e.g., a plurality of turbine blades), may each have a protected strain sensor 40 deposited in a standard location so that the amount of strain experienced by each specific turbine component may be compared to other like turbine components. In even some embodiments, multiple different turbine components of the same turbine unit (e.g., turbine blades and vanes for the same turbine) may each have a protected strain sensor 40 deposited thereon so that the amount of strain experienced at different locations within the overall turbine may be determined.

Referring additionally to FIG. 6, a method 100 is illustrated for manufacturing a protected strain sensor 40 on a component 10. The method 100 can comprise depositing the protected strain sensor 40 in step 110, wherein the protected strain sensor 40 comprises at least two reference points 41 and 42 on the substrate 11 of the component 10 as discussed herein. The method 100 further comprises depositing a peripheral coating 50 on the substrate 11 in step 120, wherein the peripheral coating 50 covers at least a portion of an exterior edge 49 of the protected strain sensor 40 as discussed herein

It should be appreciated that steps 110 and 120 may occur simultaneously, in any relative order, or combinations thereof. For example, in some embodiments, depositing the protected strain sensor 40 in step 110 may occur before depositing the peripheral coating 50 in step 120. In other embodiments, depositing the protected strain sensor 40 in step 110 may occur after depositing the peripheral coating 50 in step 120. In some embodiments, depositing the protected strain sensor 40 in step 110 may occur at the same time as, or overlapping with depositing the peripheral coating 50 in step 120. Furthermore, method 100 may be repeated to produce multiple protected strain sensors 40 on the same component 10, multiple protected strain sensors 40 on different components 10, or combinations thereof.

It should now be appreciated that protected strain sensors may be disposed on substrates to form overall components that can be monitored for strain, creep or the like. The protected strain sensors may be protected by a peripheral coating covering at least a portion of the exterior and/or interior edges of the protected strain sensor. The peripheral coating may thereby protect the protected strain sensor from erosion, corrosion, or the like while also maintaining visual access to the top surface of the protected strain sensor for periodic analysis.

## Claims

1. A component (10) comprising:
a substrate (11);
a protected strain sensor (40) comprising at least two reference points (41, 42) disposed on the substrate (11); and,
a peripheral coating (50) disposed on the substrate (11) adjacent the protected strain sensor (40), wherein the peripheral coating (50) covers at least a portion of an exterior edge (49) of the protected strain sensor (40).

2. The component (10) of claim 1, wherein the protected strain sensor (40) comprises one or more interior edges (48), and wherein the peripheral coating (50) covers at least a portion of the one or more interior edges (48).

3. The component (10) of claim 1, wherein the peripheral coating (50) does not cover a top surface (43) of the protected strain sensor (40) and wherein the peripheral coating (50) comprises a bond coat or a thermal barrier coating.

4. The component (10) of claim 1, wherein the protected strain sensor (40) and the peripheral coating (50) comprise a substantially similar height from the substrate (11) or greater height from the substrate (11) than the peripheral coating (50) and wherein the protected strain sensor (40) comprises yttria-stabilized zirconia.

5. The component (10) of claim 1, wherein the substrate (11) comprises an exposed surface adjacent the peripheral coating (50).

6. The component (10) of claim 1, wherein the substrate (11) comprises a turbine component.

7. A component (10) comprising:
a substrate (11);
an intermediate coating disposed on the substrate (11);
a protected strain sensor (40) comprising at least two reference points (41, 42) disposed on the intermediate coating; and
a peripheral coating (50) disposed on the intermediate coating adjacent the protected strain sensor (40), wherein the peripheral coating (50) covers at least a portion of an exterior edge (49) of the protected strain sensor (40).

8. The component (10) of claim 7, wherein the peripheral coating (50) and the intermediate coating may comprise the same material or different materials.

9. The component (10) of claim 7, wherein the protected strain sensor (40) comprises one or more interior edges (48), and wherein the peripheral coating (50) covers at least a portion of the one or more interior edges (48) and wherein the peripheral coating (50) does not cover a top surface (43) of the protected strain sensor (40).

10. The component (10) of claim 7, wherein the protected strain sensor (40) and the peripheral coating (50) comprise a substantially similar height from the substrate (11).

11. The component (10) of claim 7, wherein the substrate (11) comprises a turbine component.

12. A method (100) for manufacturing a protected strain sensor (40) on a component (10), the method (100) comprising:
depositing (110) the protected strain sensor (40) comprising at least two reference points (41, 42) on a substrate (11) of the component; and,
depositing (120) a peripheral coating (50) on the substrate (11), wherein the peripheral coating (50) covers at least a portion of an exterior edge (49) of the protected strain sensor (40).

13. The method (100) of claim 12, wherein the peripheral coating (50) does not cover a top surface (43) of the protected strain sensor (40).

14. The method (100) of claim 12, wherein the substrate (11) comprises an intermediate coating, and wherein the protected strain sensor (40) and the peripheral coating (50) are deposited on the intermediate coating.

15. The method (100) of claim 12, wherein depositing the protected strain sensor (40) occurs before depositing the peripheral coating (50).
